Europäisches Patentamt

European Patent Office

Office européen des brevets

(19)

(11) **EP 0 930 506 A1**

## (12) EUROPÄISCHE PATENTANMELDUNG

(43) Veröffentlichungstag:
   **21.07.1999 Patentblatt 1999/29**

(51) Int. Cl.⁶: **G01P 21/02**, G01P 5/00,
G01P 5/20

(21) Anmeldenummer: **98123720.9**

(22) Anmeldetag: **14.12.1998**

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(30) Priorität: **17.01.1998 DE 19801615**

(71) Anmelder: **ROBERT BOSCH GMBH
   70442 Stuttgart (DE)**

(72) Erfinder:
   • **Arndt, Stefan
     70569 Stuttgart (DE)**
   • **Reymann, Klaus
     70839 Gerlingen (DE)**
   • **Huebel, Michael
     70839 Gerlingen (DE)**

(54) **Kalibrierverfahren für Laserlichtschnittverfahren**

(57)   Die Erfindung betrifft ein Verfahren zur quantitativen Erfassung von Strömungsvorgängen in Fluidströmungen, bei dem in einem transparenten Strömungsobjekt ein Medium, insbesondere ein Gas oder eine Flüssigkeit, sowie in diesen enthaltene und mit der Strömung mitgeführte Partikel bewegt werden, und bei dem das Strömungsobjekt mit einem auf eine Ebene parallel zur Längsrichtung des Strömungsobjektes aufgefächerten Laserlicht durchleuchtet wird, und bei dem eine Streuung des Laserlichts durch die Partikel mit einer senkrecht zur Kanallängsrichtung angeordneten und in vertikale und horizontale Richtung verschiebbaren Kamera detektiert und mit einer der Kamera nachgeschalteten Auswerteeinheit ausgewertet wird.

   Es ist vorgesehen, daß eine Kalibrierung der Auswerteeinheit durch einen quantitativen Vergleich eines von der Kamera (10) im Strömungsobjekt aufgenommenen Bildes mit einem Abbildungsmaßstab (a') mit einem außerhalb des Strömungsobjektes aufgenommen Bildes mit einem Abbildungsmaßstab (a°) erfolgt.

Fig.1

EP 0 930 506 A1

Printed by Xerox (UK) Business Services
2.16.7/3.6

# Beschreibung

Die Erfindung betrifft ein Kalibrierverfahren für Laserlichtschnittverfahren mit den im Oberbegriff des Patentanspruchs 1 genannten Merkmalen.

Stand der Technik

Es ist bekannt, in der experimentellen Strömungstechnik Strömungsvorgänge mit einem sogenannten Laserlichtschnittverfahren zu visualisieren, um eine qualitative und/oder eine quantitative Analyse der Strömungsvorgänge zu ermöglichen. In einer einfachen Ausführung wird hierbei ein Laserstrahl zu einer annähernd zweidimensionalen Lichtebene aufgefächert und damit eine Flüssigkeits- oder Gasströmung mit darin enthaltenen Partikeln durchleuchtet. Die Auffächerung auf einen Lichtschnitt von maximal wenigen Millimetern Dicke (bis zu 2 bis 3 mm), der sich somit näherungsweise als eine zweidimensionale Lichtebene ansehen läßt, kann beispielsweise mittels einer optischen Ablenkeinheit mit rotierendem Spiegel oder mittels einer Zylinderlinse erfolgen. Von den Partikeln, die dem Strömungsmedium beigegeben sind, wird beim Passieren des Lichtschnittes Streulicht ausgesandt.

Die Partikel selbst müssen der Strömung möglichst schlupffrei folgen können und dürfen sich während der Messung nur minimal verändern. Die durch die in der Strömung mitbewegten Partikel ausgelöste Streuung des Laserlichts kann mit bloßem Betrachterauge, mittels Videotechnik, fotografisch oder anderweitig detektiert werden. Die Auswertung der optischen Brechungs- und Streuungserscheinungen kann sowohl qualitativ als auch quantitativ erfolgen. Die quantitative Auswertung basiert auf einer Beleuchtung des Strömungsfeldes in der Lichtschnittebene mit einem Dauerstrichlaser. Prinzipiell kann dabei die Belichtungszeit t über die Leuchtdauer des Lasers eingestellt werden. Bei bekannter Belichtungszeit t und bekanntem Abbildungsmaßstab a der Kamera beziehungsweise der Optik kann über die Beziehung v = a · s/t die Strecke s beziehungsweise die Strömungsgeschwindigkeit v durch Analyse der Teilchenspur a · s auf dem Bild ermittelt werden.

Bekannt ist weiterhin ein Verfahren zur Geschwindigkeitsfeldmessung (Particle Image Velocimetry - PIV), bei dem mit einem Pulslaser Doppelbelichtungen des Strömungsfeldes vorgenommen werden. Aus dem Abstand der Punkte in zueinander gehörenden Punktpaaren und dem zeitlichen Pulsabstand wird analog a · s bestimmt.

Quantitative Auswertungen der Bilder erfordern jedoch eine vorhergehende Kalibrierung des Abbildungsmaßstabes a. Die relevanten geometrischen, optischen und aufnahmetechnischen Parameter müssen entweder bekannt sein oder durch Messungen ermittelt werden. Derartige Kalibrierungen beziehungsweise Korrekturen von beeinflussenden Aufnahmeparametern sind relativ aufwendig und müssen bei jeder Veränderung jedes einzelnen Parameters neu bestimmt beziehungsweise berechnet werden.

Vorteile der Erfindung

Das erfindungsgemäße Verfahren zur Kalibrierung von Strömungsanalyseverfahren, die sich des Laserlichtschnittverfahrens bedienen, weist den Vorteil auf, daß ohne aufwendige Berechnungen oder Messungen der verwendeten Apparaturen schnelle und exakte Abstimmungen der Erfassungs- und Auswerteeinheit möglich sind. Besonders bei Bildverarbeitungssystemen mit hoher Leistungsfähigkeit ist mit dem Verfahren eine schnelle Kalibrierung mit hoher Genauigkeit möglich. Veränderungen der Abbildungseigenschaften, der Brennweite der Erfassungsoptik und der Lichtschnittausleuchtung können problemlos durch eine erneute Kalibrierung berücksichtigt werden. Im Gegensatz dazu sind Berechnungen der Abbildungseigenschaften wesentlich aufwendiger und können zudem Verzerrungen und apparativ bedingte Abbildungsfehler kaum berücksichtigen. Durch die unmittelbare Kalibrierung am für den Betrieb vorgesehenen Modell vor und/oder nach der eigentlichen Strömungsaufnahme sind Driftprobleme durch verschiedene Einflüsse aller Art nahezu ausgeschlossen. Kalibrierkonturen müssen dabei nicht im Strömungsfeld vorhanden sein, wodurch der Aufwand für einen Umbau der Meßapparatur des Modells entfällt. Zudem wird auf diese Weise eine etwaige Störung der Strömungsgeometrie weitgehend vermieden. Die mit der Kalibrierung ermittelten Meßdaten stehen in der Bildverarbeitung unmittelbar für Umrechnungen der Strömungsbilder zur Verfügung.

Weitere vorteilhafte Ausgestaltungen der Erfindung ergeben sich aus den übrigen, in den Unteransprüchen genannten, Merkmalen.

Zeichnungen

Die Erfindung wird nachfolgend in einem Ausführungsbeispiel anhand der zugehörigen Zeichnungen näher erläutert. Es zeigen:

Figur 1    eine perspektivische Ansicht des prinzipiellen Aufbaus eines Laserlichtschnittverfahrens;

Figur 2a    ein Ausschnitt einer Strömung in einem Lichtschnitt;

Figur 2b    ein Doppelbild des Ausschnitts aus Figur 2b mit verschobener Kamera;

Figur 3    eine schematische Darstellung einer Verschiebung der Kamera um $\Delta x$;

Figur 4a    schematische Darstellung einer dreidimensionalen Erfassung des Laserlichtschnittes;

Figur 4b   erfaßte Strömungsbilder in mehreren übereinanderliegenden Ebenen des Laserlichtschnittes und

Figur 4c   ein Diagramm, das den Zusammenhang der Ausdehnung von mehreren Partikeln in den verschiedenen Ebenen des Laserlichtschnittes zeigt.

Beschreibung des Ausführungsbeispiels

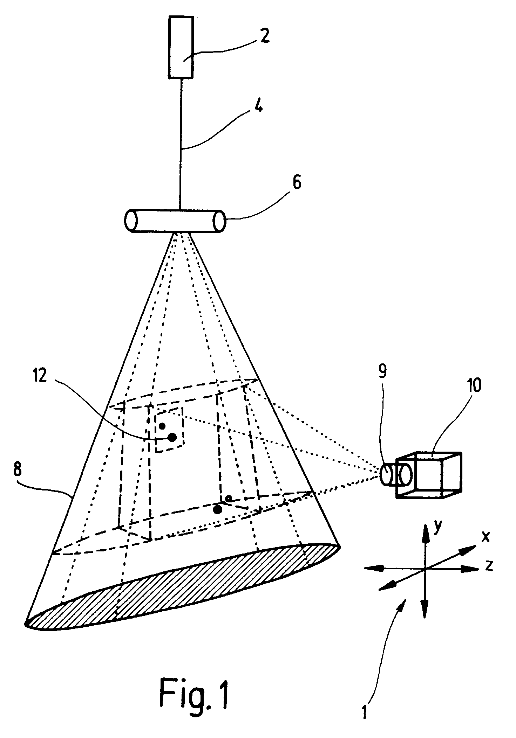

Figur 1 zeigt in einer perspektivischen Ansicht einen prinzipiellen Aufbau eines Laserlichtschnittverfahrens zur quantitativen Strömungsanalyse. Hierzu wird in einem transparenten Strömungsobjekt, beispielsweise einem Strömungskanal, eine Gas- oder Flüssigkeitsströmung betrachtet, in der zur Visualisierung der Strömungsvorgänge feine Feststoffpartikel enthalten sind. Bei Gasströmungen eignen sich statt dessen auch feine Nebeltröpfchen, die der Strömung als sogenannte Tracerpartikel beigegeben sein können. Das zu untersuchende Strömungsfeld mit in der Gas- oder Flüssigkeitsströmung mitgeführten Partikeln beziehungsweise Tröpfchen ist zur besseren Übersichtlichkeit nur durch einige beispielhaft eingezeichnete Partikel 12 angedeutet. Zur Verdeutlichung der räumlichen Ausrichtung der gesamten Meßanordnung sowie der möglichen Schwenk- beziehungsweise Verschieberichtungen einer Detektiereinrichtung, beispielsweise einer Kamera, ist ein x-y-z-Koordinatensystem 1 eingezeichnet.

Eine Laserlichtquelle 2 erzeugt einen Laserlichtstrahl 4, der in der gezeigten Ausführungsform senkrecht nach unten, entsprechend dem eingezeichneten Koordinatenkreuz 1 in negative y-Richtung, verläuft. Der Laserlichtstrahl 4 wird mittels einer im Strahlengang befindlichen Zylinderlinse 6 in einer zweidimensionalen x-y-Lichtebene, der sogenannten Lichtschnittebene 8, aufgefächert. Eine endliche Dicke, das heißt eine geringe Ausdehnung der Lichtschnittebene 8 in z-Richtung, soll hier zunächst vernachlässigt werden. In der Gas- oder Flüssigkeitsströmung werden Partikel 12 mitgeführt, die das Laserlicht der Lichtschnittebene 8 streuen und so eine Visualisierung von Strömungsvorgängen ermöglichen. In der gezeigten Ausführungsform werden die Streuungsvorgänge mittels einer Kamera 10 detektiert, welche die aufgenommenen Bilder an eine nachgeschaltete, hier nicht dargestellte, Auswerteeinheit beziehungsweise an einen Bildverarbeitungsrechner liefert. Als Erfassungseinrichtung kommt eine analog, vorzugsweise aber eine digital, arbeitende Kamera mit einer hohen Bildfolgerate in Frage, die für eine exakte Auswertung sorgt sowie die für eine exakte Kalibrierung erforderlichen Signale liefern kann.

Die Kamera 10 ist auf einer, hier ebenfalls nicht dargestellten, Verstellvorrichtung montiert, die von einer geeigneten Ansteuervorrichtung gesteuert wird und Translationsbewegungen der Kamera 10 um definierte Wege in horizontale (x-) und vertikale (y-) Richtung erlaubt. Bei sehr kleinen Wegen können diese x-y-Verschiebungen auch durch ein Verschwenken der Kamera 10 angenähert werden, was jedoch zusätzlich die Beobachtungsrichtung geringfügig verändert. Aus diesem Grund sollte grundsätzlich keine Verschwenkung der Kamera 10, sondern es sollten nur Translationsbewegungen erfolgen. Zusätzlich ist eine Verschiebung in z-Richtung, das heißt senkrecht zur Lichtschnittebene 8, möglich.

Damit die Lichtschnittebene 8 im Strömungsfeld scharf abgebildet wird, wird ein Objektiv 9 der Kamera 10 auf den Abstand zu dieser Ebene fokussiert. Liegen nun im Strahlengang des Streulichts zwischen dem Strömungskanal und der Kamera 10 hier nicht näher dargestellte optisch verzerrende Elemente, müssen für die Gewinnung zuverlässiger quantitativer Meßdaten deren Einflüsse auf den Abbildungsmaßstab bekannt sein und korrigiert werden. Derartige Verzerrungen können beispielsweise durch Krümmungen oder andere Brechungseffekte des transparenten Strömungsmodells beziehungsweise -objektes hervorgerufen werden.

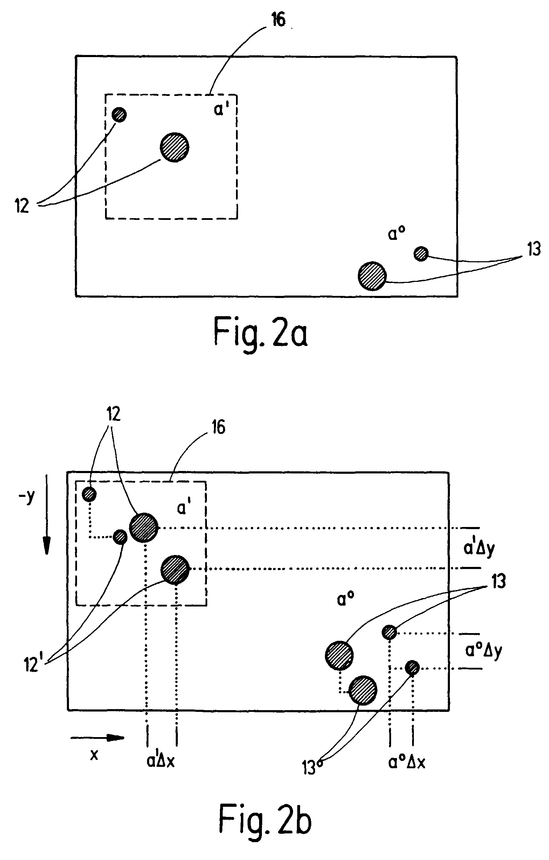

Die Figuren 2a und 2b zeigen zwei durch eine Translationsbewegung der Kamera 10 sichtbar gemachte unterschiedliche Abbildungsmaßstäbe a' innerhalb beziehungsweise a° außerhalb des optisch verzerrenden Strömungsobjektes. Um die Einflüsse der Eigenbewegung der Partikel zu minimieren, muß die Verschiebung beziehungsweise Translationsbewegung der Kamera 10 sehr schnell erfolgen. Gleiche Teile wie in der Figur 1 sind mit gleichen Bezugzeichen versehen und nicht nochmals erläutert.

Figur 2a zeigt in einem beispielhaften Kameraausschnitt eine Abbildung mehrerer in der Strömung mitgeführter Partikel 12, die sich in einem Bereich mit optischer Verzerrung 16, beispielsweise im transparenten Strömungsobjekt beziehungsweise Strömungskanal, befinden. Im gleichen Ausschnitt sind weitere Partikel 13 als Vergleichsgegenstände dargestellt, die sich in einem Bereich befinden, der nicht verzerrt abgebildet wird, beispielsweise in Luft. Der Abbildungsmaßstab für die unverzerrt abgebildeten Partikel 13 wird im folgenden mit a° bezeichnet, der Abbildungsmaßstab für die im Strömungsobjekt verzerrt abgebildeten Partikel 12 in der Laserlichtschnittebene mit a'.

Figur 2b zeigt einen Kameraausschnitt mit einer Doppel-Darstellung der abgebildeten Partikel 12, 12', 13, 13° beziehungsweise Gegenstände aus Figur 2a. Durch die Doppel-Darstellung ist eine definierte Translationsbewegung der Kamera 10 in x- und/oder in y-Richtung angedeutet, die es ermöglicht, die Abstände der Gegenstände innerhalb und außerhalb der Lichtschnittebene 8 zu vergleichen und so zu einer Kalibrierung des Abbildungsmaßstabes zu gelangen. In der Figur 2b sind die gleichen Partikel 12, 13 abgebildet wie in Figur 2a. Eine schnelle Translationsbewegung der Kamera 10 in negative y-Richtung und positive x-Richtung des Lichtschnittes 8 wird durch eine Abbildung der Partikel 12' im Bereich mit optischer Verzerrung 16 mit dem Abbildungsmaßstab a' und durch eine Abbildung der Partikel 13° im Bereich ohne optische Verzerrung mit dem Abbildungsmaßstab a° verdeutlicht. Die gleichen Partikel 12, 12' im Bereich mit optischer Verzerrung 16 erscheinen in den beiden Kameraperspektiven vor und nach der Translationsbewegung in einem Abstand von a' · $\Delta$x in x-Richtung beziehungsweise a' · $\Delta$y in y-Richtung zueinander. Die gleichen Partikel 13, 13° im Bereich ohne optische Verzerrung erscheinen in den beiden Kameraperspektiven vor und nach der Translationsbewegung in einem Abstand von a° · $\Delta$x beziehungsweise a° · $\Delta$y zueinander. Da die Abbildungsmaßstäbe a° im Bereich ohne Verzerrung, beispielsweise in Luft, und a' im Bereich mit optischer Verzerrung 16 voneinander differieren, lassen sich die Unterschiede aufgrund der optischen Verzerrung im Bereich 16 auswerten und die optische Verzerrung somit in der nachgeschalteten Auswerteeinheit rechnerisch korrigieren, damit die Messungen zu einwandfreien quantitativen Ergebnissen führen.

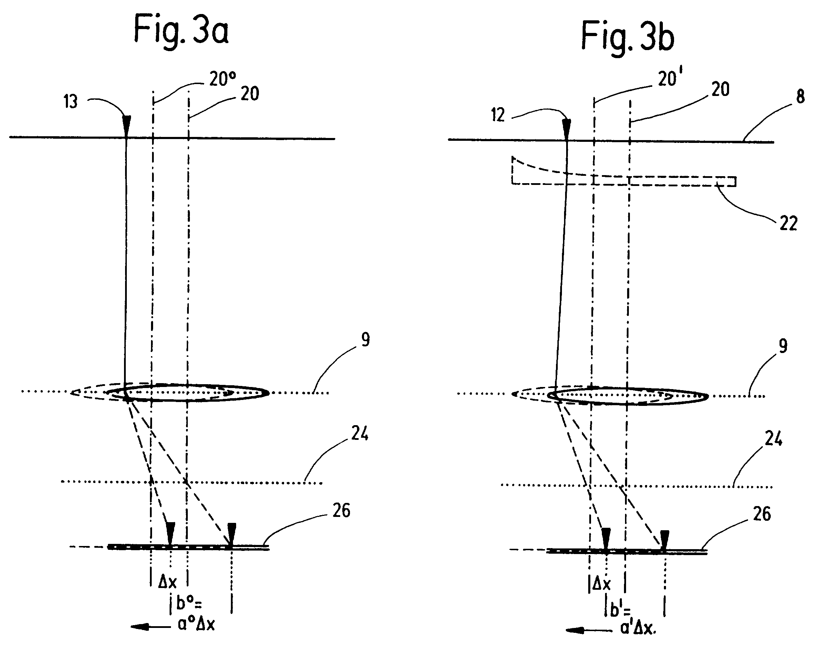

Die Figuren 3a und 3b verdeutlichen in Schemadarstellungen jeweils eine definierte Verschiebung der Kamera 10, verdeutlicht durch eine optische Achse 20 der Kamera 10, um einen bestimmten Weg $\Delta$x in x-Richtung. Gleiche Teile wie in den vorangegangenen Figuren sind mit gleichen Bezugszeichen versehen und nicht nochmals erläutert. Die notwendigen Einstellungen des Objektives 9 der Kamera 10 werden zunächst am Meßobjekt, das heißt am Strömungsobjekt beziehungsweise -kanal, vorgenommen. Hierzu wird die Fokussierung des Objektives 9, beziehungsweise die Brennweite bei Verwendung eines Zoomobjektives, so lange verändert, bis ein anvisiertes Objekt scharf abgebildet wird. Diese Werte werden für die Referenzmessung beibehalten. Die Scharfstellung auf das Kalibrierobjekt erfolgt dann lediglich durch Veränderung des Abstandes $\Delta$z der Kamera 10 vom anvisierten Objekt.

Figur 3a zeigt die Verschiebung der Kamera 10 um $\Delta$x im Abbildungsmaßstab a°, das heißt ohne optisch verzerrende Einflüsse zwischen der Bildebene und der Kamera 10, von der zur besseren Übersichtlichkeit nur ihre optische Achse 20 eingezeichnet ist. Mit einer festen Objektiveinstellung, das heißt einer festen Fokussierung des Objektives 9 beziehungsweise einer festen Brennweite bei Verwendung eines Zoomobjektives, der Kamera 10 wird zunächst ein Gegenstand beziehungsweise ein Partikel 13 außerhalb des Strömungsmodells anvisiert und der Abstand $\Delta$z der Kamera 10 zu diesem Partikel 13 so variiert, daß dieses in einer Bildebene 26 der Kamera 10 scharf abgebildet wird. Zur besseren Verdeutlichung des optischen Strahlenganges ist zudem eine Brennebene 24 zwischen Objektiv 9 und Bildebene 26 eingezeichnet. Die Fokussierung am Objektiv 9 wird dabei nicht verändert. Wird die Kamera anschließend definiert in x- und/oder in y-Richtung bewegt, wandert der Gegenstand entsprechend um die Strecke a° · $\Delta$x beziehungsweise a° · $\Delta$y in der Bildebene. In der gezeigten Darstellung ist die Kamera 10 beispielhaft um den Weg $\Delta$x verschoben, wodurch sich ebenfalls ihre optische Achse 20 um den gleichen Weg verschiebt, hier als verschobene optische Achse 20° verdeutlicht. Die Abbildung des Partikels 13 in der Bildebene 26 verschiebt sich dementsprechend um einen definierten Weg b° = a° · $\Delta$x, in dem der Abbildungsmaßstab a° den zur Kalibrierung notwendigen Faktor darstellt. Die Kamera wird anschließend wieder auf die Lichtschnittebene 8 im Strömungskanal gerichtet, was im folgenden zur Figur 3b beschrieben wird.

Figur 3b zeigt ebenfalls eine Verschiebung der Kamera 10 um $\Delta$x. Zwischen der Lichtschnittebene 8 und dem Objektiv 9 der Kamera 10 befindet sich hier jedoch eine optische Verzerrung 22, beispielsweise in Form einer gekrümmten Oberfläche des transparenten Strömungsobjektes. Der hier auftretende Abbildungsmaßstab ist mit a' bezeichnet. Da die Fokussierung gegenüber der Erfassung des Partikels 13 im optisch unverzerrten Bereich nicht geändert wurde, ist auch die Lichtschnittebene 8 mit einem darin schwebenden Partikel 12 scharf abgebildet. Bei nicht eingeschalteter Strömung schweben die Partikel 12 in der vom Laserlicht beleuchteten Lichtschnittebene 8, und es wird ein unregelmäßiges Punktebild des beleuchteten und mit Fluid gefüllten Strömungsfeldes abgebildet. Wird nun die Kamera 10 wiederum definiert in x- und/oder in y-Richtung bewegt, ergibt sich entsprechend zu den Messungen in Luft ein verschobenes Bild der Punktestruktur. In diesem Fall ergeben sich jedoch entsprechend der lokalen optischen Verzerrungen unterschiedliche Bildabstände b' der jeweiligen Punktepaare.

Die optischen Verzerrungen lassen sich dabei als lokale Abweichungen vom Abbildungsmaßstab a° interpretieren mit der Maßstabsmatrix a'. Durch Vergleich mit dem Bild in Luft erhält man die lokalen Abbildungsmaßstäbe a' = b' · a°/b°. Zur Vermeidung von Fehlern aufgrund einer vorhandenen geringen Eigenbewegung der nur scheinbar ruhenden Partikel zwischen den beiden Aufnahmen muß die Translationsbewegung der Kamera sehr schnell erfolgen. Die Bewegung muß dabei sehr viel schneller als die Eigenbewegung der Partikel 12, 13 sein. Sind im Blickfeld Bereiche ohne Verzerrungen mit einem Abbildungsmaßstab a° vorhanden oder liegen geometrisch bekannte Konturen im Lichtfeld vor, kann auf die anfängliche Messung in Luft verzichtet werden.

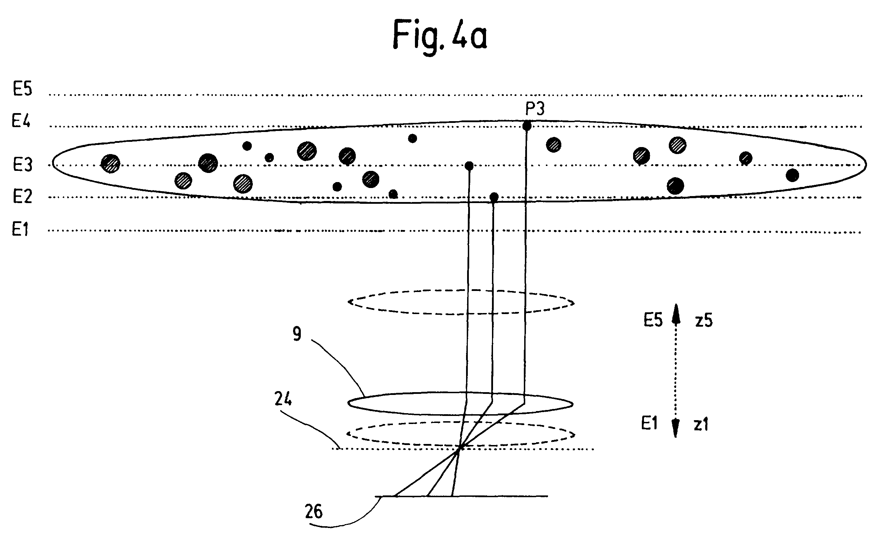

Die Figuren 4a bis 4c zeigen eine erweiterte Meßmöglichkeit zur Erfassung und Auswertung einer räumlichen Ausdehnung des Laserlichtschnittes 8 durch eine zusätzliche Berücksichtigung der geringfügigen Ausdehnung in z-Richtung. Ein solcher Lichtschnitt besitzt aufgrund der Intensitätsverteilung im Laserstrahl und aufgrund der Erzeugung über Zylinderlinsen üblicherweise eine gaußförmige Intensitätsstruktur in z-Richtung und eine elliptische Außenkontur bei Schnitt in der x-z-Ebene. Die räumliche Ausdehnung des Lichtschnittes läßt sich im Strömungsfeld bestimmen. Die Kamera wird bei festgehaltener Fokussierung einer Einstellung und geringer Tiefenschärfe (mit offener Blende) definiert in z-Richtung verschoben. Hierdurch wird eine Bildfolge des annähernd ruhenden Strömungsfeldes erhalten, wobei wiederum die Verschiebegeschwindigkeit der Kamera in z-Richtung deutlich größer sein muß als die Eigenbewegung der Partikel im Fluid. Der Verschiebebereich ist so zu wählen, daß die Endstellungen der Fokussierungen in beide z-Richtungen jeweils vollständig außerhalb der Tiefenausdehnung des Lichtschnittes liegen. Da die Partikel während der schnellen Bildfolge nahezu ruhen, also ihren Standort annähernd beibehalten, entsteht auf jedem Bild das gleiche Muster der abgebildeten Partikel, wobei jeweils die flächenmäßige Ausdehnung, das heißt der abgebildete Partikeldurchmesser und die Intensität beziehungsweise die Schwärze eines abgebildeten Partikels mit dem Grad der Fokussierung variiert. Zudem läßt sich aus der Auswertung sämtlicher erfaßter Partikel im Meßfeld sowie der räumlichen Zuordnung zu verschiedenen Ebenen mit Hilfe der Auswerteeinheit ein Abbild der räumlichen Struktur des Lichtschnittes, das heißt eine Verteilungsmatrix, bilden.

Figur 4a zeigt in einer schematischen Darstellung eines Schnittes durch die dünne x-z-Ebene des Laserlichtschnittes 8 eine Möglichkeit, die räumliche Verteilung der Partikel im Lichtschnitt zu erfassen. Die Kamera 10 ist hier beispielhaft auf fünf verschiedene, voneinander gleichweit entfernte, Ebenen in z-Richtung fokussiert, die hier mit E1 bis E5 bezeichnet sind. Verschiedene Partikel, hier als P1, P2, P3, etc. bezeichnet, werden in jeder Einstellung der Kamera an selber Stelle in der Bildebene 26 abgebildet.

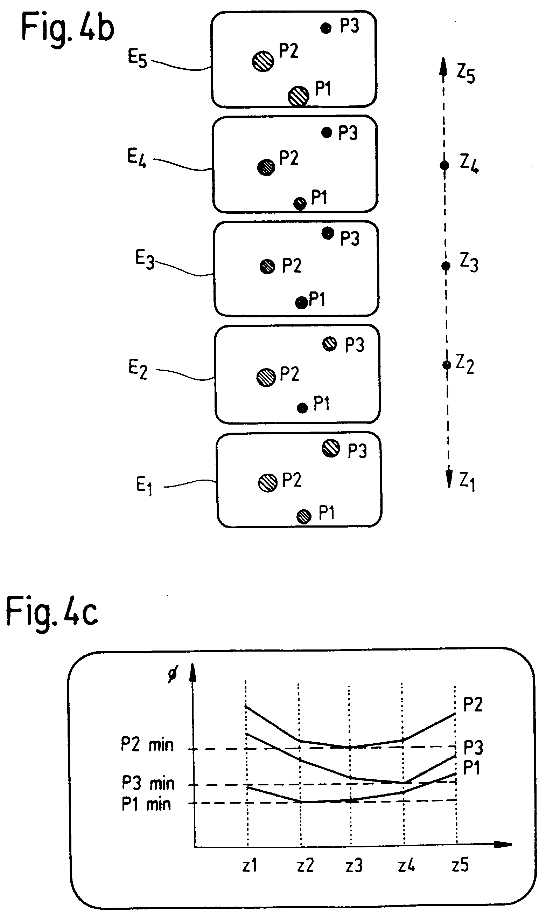

Figur 4b zeigt diesen Zusammenhang in fünf Einzelbildern der Kamera der fünf Ebenen E1 bis E5 je Bildfolge. Wird ein Partikel scharf abgebildet, ist seine Ausdehnung (Durchmesser) auf der Aufnahme minimal und die Intensität (Schwärzung) maximal. Jedes Partikel im Strömungsfeld wird somit auf wenigstens einem Bild einer Bildfolge scharf und mit minimaler Bildfläche abgebildet. Das Bild der Ebene, auf dem ein bestimmtes Partikel mit minimaler Ausdehnung und größter Schwärzung abgebildet ist, stellt somit diejenige Ebene E1 bis E5 in definiertem Abstand zur Kamera 10 dar, in welcher sich das Partikel befindet.

Figur 4c zeigt in einem Diagramm den Zusammenhang der Bildfläche bei nacheinander folgenden Bildern einer Bildfolge für mehrere beispielhafte Partikel P1, P2 und P3. Auf der horizontalen Achse sind die unterschiedlichen Abstände der Fokussierungsebene der Kamera 10 in z-Richtung aufgetragen, was den unterschiedlichen Ebenen E1 bis E5 entspricht. Die vertikale Achse des Diagrammes zeigt die unterschiedlichen abgebildeten Durchmesser der Partikel. Hierbei ist erkennbar, daß die Bildfläche für jedes Partikel bei wenigstens einem Bild ein Minimum ($P1_{min}$, $P2_{min}$, $P3_{min}$) erreicht. Liegen die Durchmesser zweier Partikel beziehungsweise deren Schwärzungen in zwei aufeinanderfolgenden Bildern auf gleichem Niveau, so liegt dieses Partikel genau zwischen den Fokussierungsabständen dieser beiden Bilder.

**Patentansprüche**

1.  Verfahren zur quantitativen Erfassung von Strömungsvorgängen in Fluidströmungen, bei dem in einem transparenten Strömungsobjekt ein Medium, insbesondere ein Gas oder eine Flüssigkeit, sowie in diesen enthaltene und mit der Strömung mitgeführte Partikel bewegt werden, und bei dem das Strömungsobjekt mit einem auf eine Ebene parallel zur Längsrichtung des Strömungsobjektes aufgefächerten Laserlicht durchleuchtet wird, und bei dem eine Streuung des Laserlichts durch die Partikel mit einer senkrecht zur Kanallängsrichtung angeordneten und in vertikale und horizontale Richtung verschiebbaren Kamera detektiert und mit einer der Kamera nachgeschalteten Auswerteeinheit ausgewertet wird, **dadurch gekennzeichnet**, daß eine Kalibrierung der Auswerteeinheit durch einen quantitativen Vergleich eines von der Kamera (10) im Strömungsobjekt aufgenommenen Bildes mit einem Abbildungsmaßstab (a') mit einem außerhalb des Strömungsobjektes aufgenommen Bildes mit einem Abbildungsmaßstab (a°) erfolgt.

2.  Verfahren nach Anspruch 1, **dadurch gekennzeichnet**, daß von der Kamera (10) ein bestimmtes Partikel (13) außerhalb des Strömungsobjektes aufgenommen wird, und daß die Kamera (10) anschließend mit hoher Translationsgeschwindigkeit um einen definierten Abstand in horizontale und/oder in vertikale Richtung verschoben wird und daß die Abstände in horizontale ($\Delta x$) und/oder in vertikale Richtung ($\Delta y$) der beiden dadurch entstehenden Abbildungen der Partikel (13, 13°) aufgenommen und von der Auswerteeinheit quantitativ ausgewertet und daß daraus ein Abbildungsmaßstab (a°) bestimmt wird.

3.  Verfahren nach Anspruch 2, **dadurch gekennzeichnet**, daß von der Kamera (10) ein bestimmtes Partikel (12) im Strömungsobjekt aufgenommen wird, und daß die Kamera (10) anschließend mit hoher Translationsgeschwindigkeit um einen definierten Abstand in horizontale und/oder in vertikale Richtung verschoben wird und daß die Abstände in horizontale ($\Delta x$) und/oder in vertikale Richtung ($\Delta y$) der beiden dadurch entstehenden Abbildungen der Partikel (12, 12') aufgenommen und von der Auswerteeinheit quantitativ ausgewertet und daß daraus ein Abbildungsmaßstab (a') bestimmt wird.

4. Verfahren nach Anspruch 3, **dadurch gekennzeichnet**, daß die aus den Aufnahmen der Kamera (10) erhaltenen Abbildungsmaßstäbe (a', a°) verglichen werden und daß daraus eine quantitative Korrektur von Abbildungsverzerrungen errechnet wird.

5. Verfahren nach einem der vorhergehenden Ansprüche, **dadurch gekennzeichnet**, daß dreidimensionale Strömungsvorgänge durch eine Analyse von Partikelbewegungen in einer geringen Dickenausdehnung des beleuchteten Teiles des Strömungsobjektes auswertbar sind.

6. Verfahren nach Anspruch 5, **dadurch gekennzeichnet**, daß die Kamera (10) zur quantitativen Auswertung dreidimensionaler Strömungsvorgänge zusätzlich in z-Richtung bewegbar ist.

7. Verfahren nach Anspruch 6, **dadurch gekennzeichnet**, daß das Objektiv der Kamera (10) auf verschieden von der Kamera (10) beabstandete Ebenen fokussierbar ist.

8. Verfahren nach Anspruch 7, **dadurch gekennzeichnet**, daß der Abstand einzelner Partikel zur Kamera (10) durch eine Analyse des abgebildeten Partikeldurchmessers und/oder der Schwärzungsintensität des Partikels bestimmbar ist.

9. Verfahren nach Anspruch 8, **dadurch gekennzeichnet**, daß für jedes abgebildete Partikel wenigstens eine Abbildung mit minimalem Durchmesser und maximaler Schwärzung existiert, wobei diese Fokussierung der Kamera (10) als Abstand des Partikels zur Kamera (10) auswertbar ist.

10. Verfahren nach Anspruch 9, **dadurch gekennzeichnet**, daß in der Auswerteeinheit durch Auswertung aller erfaßten Partikel eine räumliche Verteilungsmatrix des beleuchteten Teils des Strömungsobjektes berechenbar ist.

11. Verfahren nach einem der vorhergehenden Ansprüche, **dadurch gekennzeichnet**, daß das Strömungsobjekt ein transparenter Strömungskanal ist.

Fig. 1

## Fig. 2a

## Fig. 2b

# Fig. 3a
# Fig. 3b

EP 0 930 506 A1

# Fig. 4a

EP 0 930 506 A1

## Fig. 4b

## Fig. 4c

**Europäisches Patentamt**

# EUROPÄISCHER RECHERCHENBERICHT

Nummer der Anmeldung

EP 98 12 3720

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 866 639 A (ADRIAN RONALD J) 12. September 1989 * Spalte 4, Zeile 3 – Spalte 5, Zeile 50; Abbildungen 3A–5 * --- | 1 | G01P21/02 G01P5/00 G01P5/20 |
| A | US 5 491 642 A (WORMELL DEAN C ET AL) 13. Februar 1996 * Spalte 3, Zeile 50 – Spalte 5, Zeile 4; Abbildungen * --- | 1 | |
| A | WO 90 10876 A (UNIVERSITY OF ILLINOIS) 20. September 1990 * Seite 9, Zeile 15 – Seite 11, Zeile 12; Abbildung 1 * ----- | 1 | |
| | | | **RECHERCHIERTE SACHGEBIETE (Int.Cl.6)** G01P G01F |

Der vorliegende Recherchenbericht wurde für alle Patentansprüche erstellt

| Recherchenort | Abschlußdatum der Recherche | Prüfer |
|---|---|---|
| DEN HAAG | 23. März 1999 | Pflugfelder, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

**ANHANG ZUM EUROPÄISCHEN RECHERCHENBERICHT**
**ÜBER DIE EUROPÄISCHE PATENTANMELDUNG NR.**     EP 98 12 3720

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-1999

| Im Recherchenbericht angeführtes Patentdokument | Datum der Veröffentlichung | Mitglied(er) der Patentfamilie | Datum der Veröffentlichung |
|---|---|---|---|
| US 4866639 A | 12-09-1989 | US 4988191 A | 29-01-1991 |
| US 5491642 A | 13-02-1996 | KEINE | |
| WO 9010876 A | 20-09-1990 | US 4988191 A | 29-01-1991 |
| | | EP 0485383 A | 20-05-1992 |
| | | JP 3505260 T | 14-11-1991 |

EPO FORM P0461

Für nähere Einzelheiten zu diesem Anhang : siehe Amtsblatt des Europäischen Patentamts, Nr.12/82